# EUROPEAN PATENT SPECIFICATION

(11) **EP 1 422 277 B1**
(45) Date of publication and mention of the grant of the patent: **10.01.2007**
(21) Application number: 03026847.8
(22) Date of filing: 21.11.2003
(51) Int. Cl.: C09G 1/02, C09K 3/14

(54) **High concentration silica slurry**
Hochkonzentrierte Kieselsäureaufschlämmung
Pâté de silice a haute concentration

(30) Priority: 22.11.2002 JP 2002339402
(43) Date of publication of application: 26.05.2004
(73) Proprietor: Nippon Aerosil Co., Ltd., Shinjuku-ku, Tokyo 163-0913 (JP)
(72) Inventor: Morii, Toshio, Nippon Aerosil Co., Ltd., Yokkaichi-shi Mie-ken (JP); Brandl, Paul, Nippon Aerosil Co., Ltd., Yokkaichi-shi Mie-ken (JP)
(74) Representative: HOFFMANN EITLE

(56) References cited:
- EP-A- 0 899 005
- WO-A-01/32799
- US-A- 4 588 421
- US-A1- 2002 134 027

## Description

### BACKGROUND OF THE INVENTION

### FIELD OF THE INVENTION

The present invention relates to a silica slurry having low viscosity even if a high silica concentration by using a silica powder having a uniform particle size and low agglomeration, and also relates to a polishing composite having excellent performance by using said silica slurry. As for the silica dispersion slurry of the present invention, the silica powder is dispersed in the wide concentration range from low to high without precipitating, and the viscosity is low. So this slurry is excellent in handling, stable with the passage of time, and suitable to high-speed polishing or rough polishing. Moreover, since the impurity concentration is low, it is suitable to a chemical mechanical polishing of semiconductor materials. Furthermore, since said silica dispersion slurry can be handled with the high concentration, the supplying cost of the slurry is low.

### DISCUSSION OF THE BACKGROUND

In a chemical mechanical polishing (CMP), a dispersion slurry of fumed silica or colloidal silica has been used (Japanese Patent Laid Open No. 30333-1987, 154760-1993, 342455-2001). Generally, a polishing process of a silicon wafer is classified with 3 processes, i.e., a primary polishing, a secondary polishing and a finishing polishing, and it is required in the finishing polishing that the final condition of the surface has no scratch and haze. Furthermore, the high purity polishing slurry is strongly required in order to prevent metal ionic contaminations aroused by taking metal ions, especially sodium, into a surface layer of the substrate at the time of polishing.

### SUMMARY OF THE INVENTION

As for the dispersion liquid of the silica powder, in order to obtain a polishing liquid having few metal contaminations and excellent polishing accuracy and speed, it is necessary that the slurry has the excellent dispersibility, the low viscosity, and the excellent stability with the passage of time even if high silica concentration, in addition using the high purity silica powder. However, the silica concentration of the conventional silica dispersion slurry is limited about 40 %. If the silica concentration is more than 40 %, the suitable flowability is lost easily. Moreover, the conventional dispersion liquid has a problem that the viscosity stability with the passage of time is low. Especially, in the case of the silica powder having the fine particle size, this problem is large. More concretely, for example, in the case of the conventional slurry using the fumed silica having the average primary particle size of from 7 to 50 nm, since the silica powder is existed as agglomerates in the slurry in many cases, the particle size at the time of polishing is not uniform, and the viscosity change with the passage of time is large.

The present invention solves these problems in the conventional silica slurry, and provides the high concentration silica slurry having low viscosity and little viscosity change with the passage of time even if having high concentration.

That is, the present invention provides
[1] A silica slurry having a viscosity of < 1000 mPa·s and comprising, dispersed in a solvent, more than 50 wt.-% of a fumed silica powder produced by a dry process, which silica powder has
   i) a ratio DL/DT, where DL is the average particle size of the silica powder measured by a laser diffraction particle size distribution method and DT is that determined by a TEM photography observation, of < 1.3
   ii) a average primary particle size of 0.08-0.8 µm, and
   iii) impurity concentrations of < 1.0 ppm each of Na and K, < 1.0 ppm Al, and < 5 ppm each of S, Ni, Cr and Fe.
[2] The silica slurry as in [1], wherein the silica concentration is > 70 wt.-% and < 80 wt.-% and the viscosity at the time of preparing is < 800 mPa·s.
[3] The silica slurry as in [1] or [2], wherein the ratio B/A of the viscosity (B) of the slurry measured after one month and the viscosity (A) of the slurry measured at the time of preparing is < 1.5.
[4] A polishing composite comprising the silica slurry as in any of [1] - [3].

### DETAILED DESCRIPTION OF THE PREFERRED ENBODIMENT

The silica dispersion slurry of the present invention uses the silica powder having few impurities and has the low viscosity and the little viscosity change with the passage of time even if the high concentration. Therefore, the silica dispersion slurry of the present invention is suitable as the polishing composite of a silicon wafer or the like. In addition, when said silica dispersion slurry is used in CMP, it is possible to obtain the excellent effect in both performances of the polishing speed and accuracy.

Hereinafter, the present invention is explained more concretely according to the preferred embodiment. In addition, % is by weight unless it is shown especially.
The silica slurry of the present invention is a high concentration silica slurry having a silica concentration of more than 50 weight % and viscosity of less than 1000 mPa·s, wherein the silica powder is dispersed in an solvent, has the ratio DL/DT of less than 1.3, where DL is an average particle size of the silica powder measured by a laser diffraction particle size distribution method and DT is that by a TEM photography observation, and has the average primary particle size of from 0.08 µm to 0.8µm.

The silica powder used in the slurry of the present invention is the powder having the average primary particle size of from 0.08 µm to 0.8 µm. When the silica powder having the average primary particle size of smaller than 0.08 µm is used, the slurry becomes unstable easily, so that the viscosity change with the passage of time and the precipitation in the slurry occur easily. On the other hand, when the silica powder having the average primary particle size of larger than 0.80µm is used, said powder precipitates easily in the slurry, and causes the scratch or the like at the time of polishing.

Moreover, the silica powder used in the slurry of the present invention is the powder, in which the ratio DL/DT is less than 1.3, where DL is the average particle size of the silica powder measured by the laser diffraction particle size distribution method and DT is that by the TEM photography observation. Since the TEM observation is suitable to measure the primary particle size, the average particle size of the silica powder by the TEM photography observation (DT) shows the primary particle size. On the other hand, the laser diffraction particle size distribution method is suitable to measure the particle size including the secondary agglomerates, so that the average particle size of the silica powder measured by the laser diffraction particle size distribution method (DL) shows the particle size including the secondary agglomerates. Therefore, the ratio of these particle sizes (DL/DT) shows the ratio of the agglomeration of particles. More concretely, the silica powder having the ratio of the average particle sizes (DL/DT) of more than 1.3, has many secondary agglomerates, so that it is difficult to make the silica slurry having high concentration and low viscosity.

As mentioned above, the silica powder of the present invention has few secondary agglomerates, and as for the secondary agglomerates, it is preferable that the average particle size of them is mostly smaller than 1.0 µm. Moreover, as for the agglomerated particles, it is preferable that the agglomerated particles of more than 95 % are in one peak of a size distribution curve in the range of the particle size of less than 1.0 µm. When the agglomerated particles of less than 95 % are in one peak of the size distribution curve or the average particle size of the secondary agglomerates in this peak is more than 1.0 µm, the slurry becomes unstable, so that the viscosity change with the passage of time becomes large.

Moreover, as for the silica powder used in the slurry of the present invention, each impurity concentration of sodium and potassium in the silica powder is less than 1.0 ppm. When the slurry dispersed with the silica powder having each impurity concentration of sodium and potassium of more than 1.0 ppm is used in the polishing of the wafer or the like, ionic impurities of sodium and potassium contained in the silica powder are taken into to contaminate the surface layer of the wafer at the time of polishing, so that the scratch or the haze occurs easily on the polished surface.

In order to prevent metal contaminations, the concentrations of impurities other than sodium and potassium are kept as low as possible. More concretely, aluminum is less than 1.0 ppm, and each of sulfur, nickel, chromium and iron is less than 0.5 ppm. Preferably, each of sulfur, nickel and chromium is less than 0.1 ppm.

The silica powder having the low impurities concentration and the particle size of said range is, for example, the fumed silica or the like produced by a dry process, such as a flame hydrolysis method or the like. In the case of the silica powder produced by a wet process, it is difficult to obtain the slurry having the impurities concentration of less than the above-mentioned level. As the silica powder produced by the dry process, for example, it is preferable to use the silica powder produced by the method described in Japanese Patent Laid Open No. 3213-2002. This production method is to produce an amorphous fine silica powder by introducing a gaseous silicon compound into a flame and hydrolyzing it. In this production method, the amorphous silica powder having the average particle size (median size) of from 0.08 to 0.8µm and the specific surface area of from 5 to 30 m² / g by the BET method, is produced by making the flame temperature to be a melting point of silica, growing the silica particle while keeping the silica concentration in the flame of more than 0.25 kg / Nm³, and staying the grown silica particle at the high temperature of more than the melting point in short time.

In said production method, as a raw material, the silicon compounds, such as, silicon tetrachloride, trichlorosilane, dichlorosilane, methyltrichlorosilane or the like are used and can be carried out the hydrolysis reaction at high temperature by introducing into the oxy-hydrogen flame in gaseous state. These gaseous silicone compounds, such as silicon tetrachloride or the like, are suitable to produce the high purity silica particle since impurities in the raw material can be removed easily by a distillation refining.

By using the silica particle, in which the ratio of average particle size (DL/DT) and the average primary particle size are above-mentioned range, it is possible to obtain the low viscosity silica slurry having the viscosity of less than 1000 mPa·s and the little viscosity change with the passage of time, even if having the high silica concentration of more than 50 %. More concretely, for example, it is possible to obtain the low viscosity silica slurry, in which the silica concentration is more than 70 %, the initial viscosity is less than 800 mPa·s., and the ratio B/A is less than 1.5,where B is the viscosity of the slurry measured after one month and A is that at the time of preparing (hereinafter, it is said to as the viscosity ratio with the passage of time). When the viscosity ratio with the passage of time (B/A) is more than 1.5, the viscosity change with the passage of time is large and the slurry is unstable.

It is preferable that the silica concentration of the slurry is less than 80 %. When the silica concentration is more than 80 %, the viscosity becomes too high to generate gelation or precipitation easily. Moreover, the stability with the passage of time of the slurry is reduced, by which the gelation or the precipitation generates easily by the general temperature change or the difference of the transportation or preservation conditions. Furthermore, when the viscosity of the slurry is more than 1000 mPa·s, the handling becomes difficult. In addition, as a solvent dispersing the silica powder, a polar solvent, such as the distilled water or the like, is preferable. It is suitable that the viscosity of the solvent is less than 10 mPa·s.

In the silica slurry of the present invention, if the characteristics of the silica powder, such as the concentration of impurities, the ratio of average particle size DL/DT and the average primary particle size, are in above-mentioned range, the more than two kinds of the silica powder having the different particle size can be used. Furthermore, other metal oxide powders, such as an alumina powder, composite oxide powders, doped materials or the like, can be contained with the silica powder. It is necessary that the amount of these oxide powders is in the range which does not disturb the characteristics of the slurry of the present invention. By containing these metal oxide powders, the polishing according to the purpose can be carried out.

### EFFECT OF THE INVENTION

The silica slurry of the present invention is the slurry having the high concentration and low viscosity, i.e., the silica concentration is more than 50 % and the viscosity is less than 1000 mPa·s, by using the silica powder in which the ratio of the average particle size (DL/DT) and the average primary particle size are prepared in the fixed range. It is preferable that the silica concentration is from 70 % by weight to 80 % by weight, the viscosity at the time of preparing is less than 800 Pa-s, and the viscosity ratio with the passage of time (B/A) is less than 1.5. The silica slurry of the present invention is the slurry having low viscosity and little viscosity change with the passage of time, even if having high silica concentration. The silica slurry of the present invention uses the silica having low impurities, in which the each impurity concentration of sodium and potassium is less than 1.0 ppm, the amount of aluminum is less than 1.0 ppm, and each of the content of sulfur, nickel, chromium and iron is less than 0.5 ppm. Therefore, the silica slurry having high silica concentration of the present invention is suitable to use for polishing and, in the chemical mechanical polishing (CMP) or the like, the polishing speed is comparatively high and the polishing accuracy is excellent.

### EXAMPLES

Hereinafter, the present invention will be explained more concretely with examples and comparison examples. In addition, in each example, the viscosity is measured by using Rheo Stress meter produced by HAAKE Co., and the particle size is measured by using a laser dispersion type particle size distribution meter produced by HORIBA Co. The viscosity is the value at the shearing speed of 100 / s, and the viscosity change with the passage of time is measured after one month from the time of the slurry preparation.

### [Example 1]

Fumed silica produced by Nippon Aerosil Co. ltd, having the impurities concentration being shown in Table 1 (a trade name was VP-OX30 and the specific surface area was 30m² / g by the BET method) was added to the distilled water. The added fumed silica was dispersed to become slurry by stirring, and pH was adjusted to 8.9. Then, the slurry having the silica concentration of 75 % was prepared. The viscosity and the viscosity ratio with the passage of time of this slurry were measured. These results were shown in Table 1 with the making slurry conditions.

### [Example 2]

Fumed silica produced by Nippon Aerosil Co. ltd, having the impurities concentration shown in Table 1 (the trade name was VP-OX10 and the specific surface area was 10m² / g by the BET method) was added to the distilled water. The added fumed silica was dispersed to become slurry by stirring, and pH was adjusted to 9.2. Then, the slurry having the silica concentration of 80 % was prepared. The viscosity and the viscosity ratio with the passage of time of this slurry were measured. These results were shown in Table 1 with the making slurry conditions.

### [Comparison example]

The slurry was prepared by the same process as the example 1 excepting using fumed silica having the ratio of the average particle size (DL/DT) of 5.5 and the average primary particle size of 0.012µm. The concentration of silica, the viscosity and the viscosity ratio with the passage of time of this slurry were measured. These results were shown in Table 1 with the making slurry conditions.

As shown in Table 1, in the case of each silica slurry of example 1 and 2 of the present invention, each initial viscosity of the slurry at the time of preparing was 700 mPa·s and 800 mPa·s respectively, even if each silica concentration was more than 75 %. That is, the each viscosity of the silica slurries was low. Moreover, each viscosity of the silica slurries after one month was 730 mPa·s and 850 mPa·s respectively, so that each slurry had little viscosity change with the passage of time and was stable. On the other hand, in the case of comparison example , since the ratio of the average particle size (DL/DT) is larger and the average primary particle size is lower than the range of present invention, the viscosity of the slurry is remarkably high as more than 3000mPa·s even if the silica concentration was low as 10 %.

**[Table 1]**

| | | | Example 1 | Example 2 | Comparison Example |
|---|---|---|---|---|---|
| Silica Particle | Impurities Amount [ppm] | Na | < 1.0 | < 1.0 | < 1.0 |
| | | K | < 1.0 | < 1.0 | < 1.0 |
| | | S | < 0.1 | < 0.1 | < 0.1 |
| | | Fe | < 0.5 | < 0.5 | < 0.5 |
| | | Al | < 1.0 | <1.0 | <1.0 |
| | | Ni | < 0.1 | < 0.1 | < 0.1 |
| | | Cr | < 0.1 | < 0.1 | < 0.1 |
| | DL / DT ** | | 1.2 | 1.1 | 1.5 * |
| | Average Primary Particle Size (µm) | | 0.1 | 0.15 | 0.012* |
| Slurry | Silica Concentration (%) | | 75 | 80 | 10 |
| | Viscosity*** [A] (at the time of preparing) | | 700 | 800 | >3000 |
| | *** Viscosity [B] (after one month) | | 730 | 850 | >3000 |
| | Viscosity Ratio [B / A] with Passage of Time | | 1.04 | 1.06 | - |

| | | | | | |
|---|---|---|---|---|---|
| * value outside the range according to the present invention ** DL is an average particle size measured by a laser diffraction particle size distribution method, DT is an average particle size obtained by a TEM photography observation method, and DUDT is the ratio of the average particle size, *** The unit of Viscosity is [mPa·s] | | | | | |

## Claims

1. A silica slurry having a viscosity of < 1000 mPa·s and comprising, dispersed in a solvent, more than 50 wt.-% of a fumed silica powder produced by a dry process, which silica powder has
i) a ratio DL/DT, where DL is the average particle size of the silica powder measured by a laser diffraction particle size distribution method and DT is that determined by a TEM photography observation, of < 1.3
ii) a average primary particle size of 0.08-0.8µm, and
iii) impurity concentrations of < 1.0 ppm each of Na and K, < 1.0 ppm Al , and < 5 ppm each of S, Ni, Cr and Fe.

2. The silica slurry of Claim 1, wherein the silica concentration is > 70 wt.-% and < 80 wt.-% and the viscosity at the time of preparing is < 800 mPa·s.

3. The silica slurry of Claim 1 or 2, wherein the ratio B/A of the viscosity (B) of the slurry measured after one month and the viscosity (A) of the slurry measured at the time of preparing is < 1.5.

4. A polishing composite, comprising the silica slurry of any of Claims 1-3.

## Patentansprüche

1. Siliciumdioxidaufschlämmung mit einer Viskosität von weniger als 1000 mPa·s, die mehr als 50 Gew.-% eines in einem Lösungsmittel dispergierten Siliciumdioxidstaubs (fumed silica powder) umfasst, der durch einen Trockenprozess hergestellt worden ist, wobei der genannte Siliciumdioxidstaub
i) ein Verhältnis DL/DT von weniger als 1,3 aufweist, wobei DL die mittlere, durch eine Laserbeugungspartikelgrößeverteilungsmethode bestimmte mittlere Partikelgröße des Siliciumdioxidstaubs ist und DT die mittlere durch Transmissionselektronenmikroskopphotographiebeobachtung bestimmte Partikelgröße ist,
ii) eine mittlere Primärpartikelgröße von 0,08 bis 0,8 µm und
iii) Verunreinigungen in Konzentrationen von jeweils weniger als 1,0 ppm Na und K, weniger als 1,0 ppm Al und jeweils weniger als 5 ppm S, Ni, Cr und Fe hat.

2. Siliciumdioxidaufschlämmung gemäß Anspruch 1, wobei die Siliciumdioxidkonzentration größer als 70 Gew.-% und kleiner als 80 Gew.-% ist und die Viskosität zum Zeitpunkt der Herstellung weniger als 800 mPa·s beträgt.

3. Siliciumaufschlämmung gemäß Anspruch 1 oder 2, wobei das Verhältnis B/A der Viskosität (B) der Aufschlämmung nach einem Monat und die Viskosität (A) zum Zeitpunkt der Herstellung weniger als 1,5 beträgt.

4. Polierverbund umfassend die Siliciumdioxidaufschlämmung gemäß einem der Ansprüche 1 bis 3.

## Revendications

1. Suspension de silice ayant une viscosité < 1000 mPa·s et comprenant, dispersée dans un solvant, plus de 50 % en poids d'une poudre de silice fumée produite par un procédé à sec, poudre de silice qui présente :
i) un rapport DL/DT, où DL est la taille moyenne de particule de la poudre de silice mesurée par un procédé de distribution de tailles de particule par diffraction au laser et DT est celle déterminée par une observation d'une photographie au TEM, < 1,3,
ii) une taille de particule moyenne principale de 0,08 à 0,8 µm, et
iii) des concentrations d'impuretés < 1,0 ppm de chacun de Na et K, < 1,0 ppm de Al et < 5 ppm de chacun de S, Ni, Cr et Fe.

2. Suspension de silice selon la revendication 1, dans laquelle la concentration de la silice est > 70 % en poids et < 80 % en poids et la viscosité lors de la préparation est < 800 mPa.s.

3. Suspension de silice selon la revendication 1 ou 2, dans laquelle le rapport B/A de la viscosité (B) de la suspension mesurée après un mois et la viscosité (A) de la suspension mesurée lors de la préparation est < 1,5.

4. Composite de polissage, comprenant la suspension de silice selon l'une quelconque des revendications 1 à 3.
